# EUROPEAN PATENT APPLICATION

(11) **EP 4 579 414 A1**
(43) Date of publication of application: **02.07.2025**
(21) Application number: 23383406.8
(22) Date of filing: 29.12.2023
(51) Int. Cl.: G06F 3/0482, G06F 3/0485, G06F 3/0486, G06F 3/04883

(54) **A COMPUTER-IMPLEMENTED METHOD AND A COMPUTER PROGRAM FOR OPERATING A TOUCHSENSITIVE DISPLAY, AND A TOUCH-SENSITIVE DISPLAY**

(71) Applicant: Seat, S.A., 08760 Martorell (ES)
(72) Inventor: SEGURA MARTÍ, Marc, 08760 MARTORELL (ES); NEPORMOSENO ROSALES, Laura, 08760 MARTORELL (ES); ARAJOL LÓPEZ, Eduard, 08760 MARTORELL (ES); ARTIGAS TORRENT, Eva, 08760 MARTORELL (ES)
(74) Representative: Pons

(57) **Abstract**

The present invention relates to a computer-implemented method for operating a touch-sensitive display, comprising:
- entering in an editing mode for reorganizing widgets and/or icons (W1) of a virtual page displayed on a touch-sensitive display (D) and a further virtual page virtually contiguous to the virtual page;
- virtually dragging a widget and/or icon (Wd) from the virtual page to the further virtual page; and
- while carrying out the virtual dragging towards the further virtual page, displaying on the touch-sensitive display (D) only a portion of the further virtual page, that portion including a target area for virtually inserting the widget and/or icon (Wd) being virtually dragged, and dropping in the target area the widget and/or icon (Wd) being virtually dragged.

The present invention also relates to a computer program and a touch-sensitive display, both adapted to implement the method of the invention.

## Description

### FIELD OF THE INVENTION

The present invention relates, in a first aspect, to a computer-implemented method for operating a touch-sensitive display.

A second aspect of the present invention relates to a computer program, adapted to implement the steps of the method of the first aspect.

A third aspect of the present invention relates to a touch-sensitive display, adapted to implement the method of the first aspect of the present invention.

### BACKGROUND OF THE INVENTION

Computer-implemented methods for operating a touch-sensitive display comprising the following features are known in the art:
- entering in an editing mode for reorganizing widgets and/or icons of a virtual page displayed on a touch-sensitive display and of at least one further virtual page intended to be but not yet displayed on said touch-sensitive display but virtually contiguous to the virtual page; and
- virtually dragging at least one widget and/or icon from said virtual page to said at least one further virtual page, in response to the detection of a contact maintained along a corresponding drag movement made by a user in a touch input region of the touch-sensitive display.

In those methods known in the art, while carrying out the virtual dragging towards the at least one further virtual page, the touch-sensitive display displays the whole contiguous further virtual page, i.e. according to a page by page scrolling, which results in a lack of precision and possible errors in locating the right target area and drop the widget/icon being dragged thereon.

It is, therefore, necessary to provide an alternative to the state of the art which covers the gaps found therein, by providing a computer-implemented method for operating a touch-sensitive display which does not possess the above mentioned drawbacks.

### SUMMARY OF THE INVENTION

To that end, the present invention relates, in a first aspect, to a computer-implemented method for operating a touch-sensitive display comprising:
- entering in an editing mode for reorganizing widgets and/or icons of a virtual page displayed on a touch-sensitive display and of at least one further virtual page intended to be but not yet displayed on said touch-sensitive display but virtually contiguous to the virtual page; and
- virtually dragging at least one widget and/or icon from said virtual page to said at least one further virtual page, in response to the detection of a contact maintained along a corresponding drag movement made by a user in a touch input region of the touch-sensitive display.

In contrast to the methods known in the art, the one of the first aspect of the present invention, in a characterizing manner, further comprises, while carrying out the virtual dragging towards the at least one further virtual page, displaying on the touch-sensitive display only a portion of the at least one further virtual page, said portion including a target area for virtually inserting the at least one widget and/or icon being virtually dragged, and dropping in said target area the at least one widget and/or icon being virtually dragged.

Hence, a high precision and suppression of possible errors in locating the target area and drop the widget and/or icon being dragged thereon is achieved.

Generally, together with that portion of the at least one further virtual page, part or the whole virtual page is also displayed on the touch-sensitive display.

It must be understood that the terms virtual page, part of virtual page, further virtual page, and portion of further virtual page, must be understood in the present invention according to its broadest meaning, so that that the virtual page, or part thereof, is displayed on the touch-sensitive display together with a portion of the virtual page may mean that two distinguishable virtual pages are partially or totally displayed, or simply that areas or contents of them are displayed together, those areas or contents including widgets/icons or being empty of widgets/icons.

For an embodiment, the method further comprises, while carrying out the virtual dragging towards the at least one further virtual page, sequentially displaying on the touch-sensitive display contiguous portions of the at least one further virtual page, until arriving at said portion including said target area and dropping therein the at least one widget and/or icon being virtually dragged.

For an implementation of that embodiment, the method comprises performing said sequential displaying on the touch-sensitive display contiguous portions of the at least one further virtual page from the moment at which the at least one widget and/or icon being dragged is located at the end of the virtual page contiguous to said at least one further virtual page.

According to an embodiment, the above mentioned portion or each of the above mentioned contiguous portions displays or is intended to display a column or a row of widgets and/or icons, thus providing a drag displacement, or scrolling, column by column or row by row.

For an embodiment, the widgets/icons are arranged closely together, in those columns or rows, without leaving gaps between them, at least in the direction of that drag displacement column by column or row by row. For example, if the scrolling is column by column, only an additional free column without widgets/icons is displayed when the user reaches the maximum scrolling. I.e., an entire free further virtual page without widgets/icons is not shown.

For an implementation of any of the above embodiments involving contiguous portions, only a portion of those contiguous portions which is located at a last possible location achievable by a virtual displacement corresponding to said sequential displaying is empty of widgets and/or icons.

According to an embodiment, the method of the first aspect of the present invention further comprises, while being in the editing mode, before performing the above mentioned virtual dragging, displaying on the touch-sensitive display an edge region of the at least one further virtual page and/or at least parts of widgets and/or icons contained therein.

For an embodiment, the at least one further virtual page comprises at least two virtual pages, respectively virtually contiguous to the left and right or to the top and bottom of the virtual page.

The method of the first aspect of the present invention further comprises, for an embodiment, while performing the virtual dragging, displaying on the touch-sensitive display an indicator of the amount of virtual displacement between the virtual and further virtual page(s), both of the currently performed virtual displacement, progression thereof and of the available pending virtual displacement, wherein said virtual displacement is associated to the virtual dragging.

According to an embodiment, the method of the first aspect of the present invention further comprises entering in a navigation mode for navigating between the virtual page and the at least one virtual page, wherein while in said navigation mode the method comprises alternatively displaying on the touch-sensitive display the virtual page and the at least one virtual page in their entirety, each of the virtual page and at least one virtual page containing a respective completely different group of widgets and/or icons.

For an implementation of that embodiment, while in the navigation mode, the method further comprises displaying on the touch-sensitive display indicators of which virtual page, of said virtual page and at least one virtual page, is being currently displaying on the touch-sensitive display and of the amount of total virtual pages available to be displayed therein.

The present invention also relates, in a second aspect, to a computer program, which comprises code instructions that when executed in at least one processor implement the steps of the method of the first aspect.

The present invention also relates, in a third aspect, to a touch-sensitive display, comprising processing means adapted to execute the code instructions of the computer program of the second aspect, to implement the method of any of the first aspect.

### BRIEF DESCRIPTION OF THE FIGURES

In the following some preferred embodiments of the invention will be described with reference to the enclosed figures. They are provided only for illustration purposes without however limiting the scope of the invention.

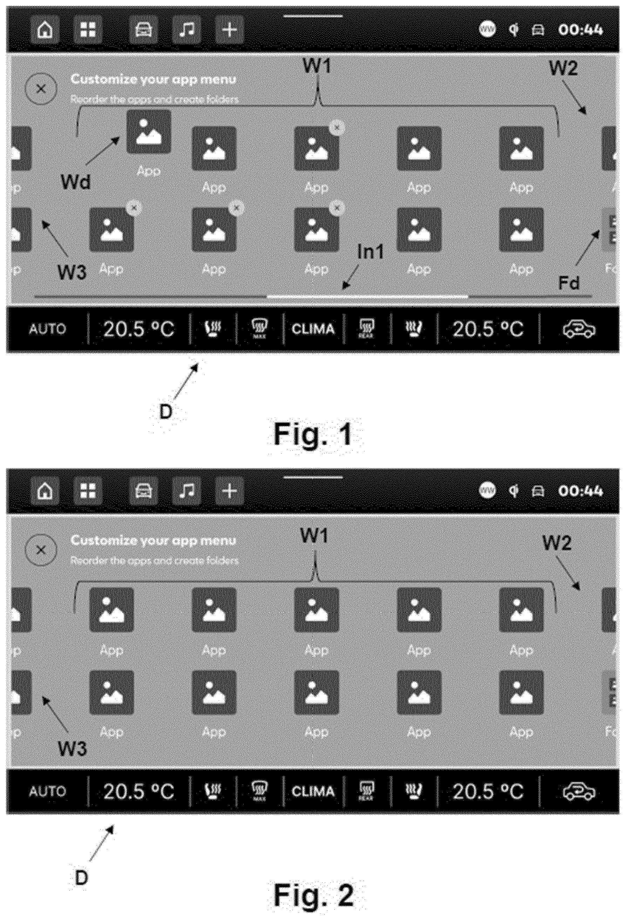

Figure 1 schematically shows the touch-sensitive display of the third aspect of the present invention, for an embodiment, showing what is displayed therein when implementing the method of the first aspect of the present invention, for an embodiment where in an editing mode a widget/icon is being dragged.
Figure 2 schematically shows the touch-sensitive display of the third aspect of the present invention, for an embodiment, showing what is displayed therein when implementing the method of the first aspect of the present invention, for an embodiment where in an editing mode, but no widget/icon is still being dragged, and widgets/icons of left- and right- contiguous further virtual pages are displayed together with a central virtual page.

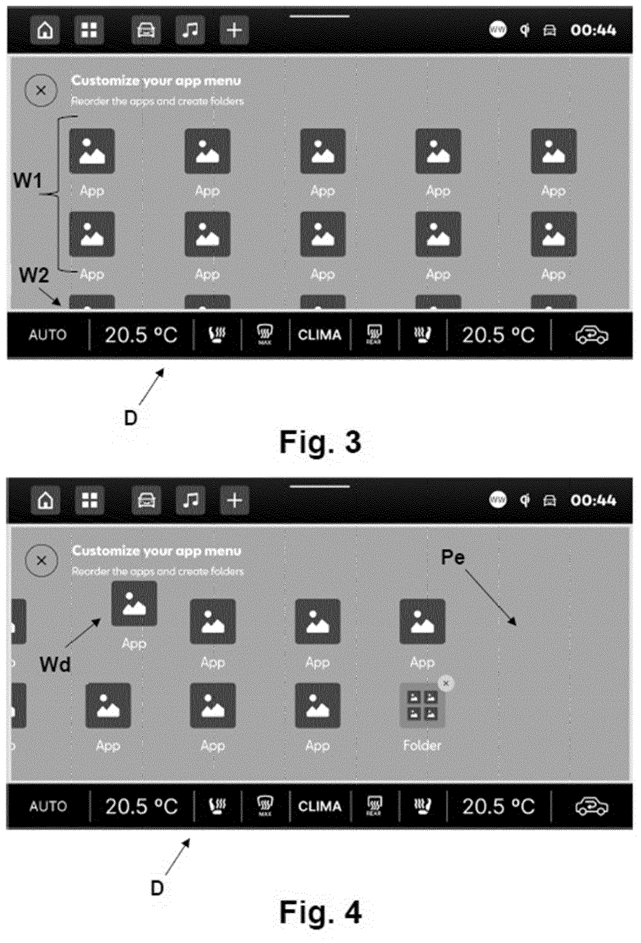

Figure 3 schematically shows the touch-sensitive display of the third aspect of the present invention, for an embodiment, showing what is displayed therein when implementing the method of the first aspect of the present invention, for an embodiment alternative to that of Figure 2, where in an editing mode, but no widget/icon is still being dragged, and widgets/icons of a bottom contiguous further virtual page are displayed together with an upper virtual page.
Figure 4 schematically shows the touch-sensitive display of the third aspect of the present invention, for an embodiment, showing what is displayed therein when implementing the method of the first aspect of the present invention, for an embodiment where in an editing mode a widget/icon is being dragged, and a portion of a right contiguous virtual page is shown that includes a target area empty of widgets/icons.

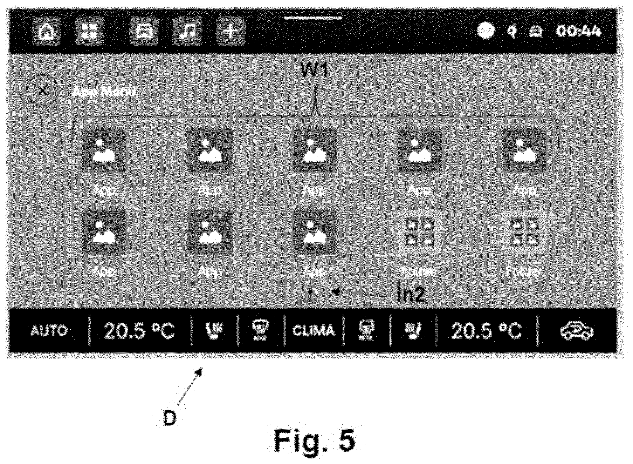

Figure 5 schematically shows the touch-sensitive display of the third aspect of the present invention, for an embodiment, showing what is displayed therein when implementing the method of the first aspect of the present invention, for an embodiment where in a navigation mode for navigating between a central virtual page, already displayed therein, and a right further virtual page, not yet displayed therein.

### DESCRIPTION OF THE PREFERRED EMBODIMENTS

The appended figures show different embodiments of the different aspects of the present invention, namely the method of the first aspect of the invention and the touch-sensitive display D and computer program implementing the method.

The computer-implemented method for operating a touch-sensitive display of the first aspect of the present invention comprises entering in an editing mode (for example, by long pressing a widget/icon W1) for reorganizing widgets and/or icons W1 (identified with reference "App" in the figures) of a virtual page displayed on the touch-sensitive display D and one or more further virtual pages intended to be but not yet displayed on the touch-sensitive display D but virtually contiguous to the virtual page.

That editing mode is shown in Figures 1 to 4, as indicated therein by the legends "Customize your app menu" "Reorder the apps and create folders".

The method further comprises virtually dragging a widget and/or icon Wd from the virtual page to the further virtual page(s), in response to the detection of a contact maintained along a corresponding drag movement made by a user in a touch input region of the touch-sensitive display D.

The start of that virtual dragging is shown in Figures 1 and 4, for the widget/icon Wd.

The here called virtual page is that occupied by the widgets/icons W1, as shown in Figures 1-3 and 5, while the here called further virtual pages are those partially occupied by widgets/icons W2 or W3, as shown in Figures 1-3, or by a portion Pe empty of widgets/icons, as shown in Figure 4.

The method further comprises while carrying out that virtual dragging towards the further virtual page, displaying on the touch-sensitive display D only a portion of the further virtual page, that portion including a target area for virtually inserting the widget and/or icon Wd being virtually dragged, and dropping in that target area the widget and/or icon Wd being virtually dragged.

That target area can be, for example, the portion Pe shown in Figure 4, which is empty of widgets and/or icons, or within any "folder", such as that partially shown in Figure 1 represented by an icon identified as "Fd".

The method further comprises, while carrying out the virtual dragging towards the further virtual page, sequentially displaying on the touch-sensitive display D contiguous portions of the further virtual page, preferably from the moment at which the widget and/or icon Wd being dragged is located at the end of the virtual page contiguous to the further virtual page, until arriving at the portion including the target area and dropping therein the widget and/or icon Wd being virtually dragged.

For the embodiment of Figure 1, 2 and 4, each of those contiguous portions of the further virtual page displays a column of widgets and/or icons W2, W3 of right- and left-further virtual pages, thus the sequentially displaying provides a drag displacement column by column.

For the embodiment of Figure 3, each of those contiguous portions of the further virtual page displays a row of widgets and/or icons W2 of a bottom further virtual page, thus the sequentially displaying provides a drag displacement row by row.

Preferably, only a portion Pe of the contiguous portions of the further virtual page which is located at a last possible location achievable by the virtual displacement corresponding to the sequential displaying is empty of widgets and/or icons, as shown in Figure 4, where portion Pe corresponds to the space of column empty of widgets and/or icons. This is done so that there are no empty spaces in the virtual pages other than those at those last possible locations.

As shown in Figures 2 and 3, the method further comprises, while being in the editing mode, before performing the virtual dragging, displaying on the touch-sensitive display D an edge region of the further virtual page(s) and/or parts of widgets and/or icons W2, W3 contained therein.

Figure 1 also shows an embodiment of the method of the first aspect of the present invention for which the method further comprises, while performing the virtual dragging, displaying on the touch-sensitive display D an indicator In1 of the amount of virtual displacement between the virtual and further virtual pages, both of the currently performed virtual displacement, progression thereof and of the available pending virtual displacement, wherein that virtual displacement is associated to the virtual dragging. In this case, the indicator In1 is a horizontal scrollbar, but any other kind of indicator suitable for performing the same or a similar function could be used.

The method of the first aspect of the present invention also comprises entering in a navigation mode for navigating between the virtual page and the further virtual pages. Figure 5 shows an embodiment of what is displayed in the touch-sensitive display D when in that navigation mode, in this case for navigating between a central virtual page, already displayed therein, and a right further virtual page, not yet displayed therein.

In that navigation mode, the method comprises alternatively displaying on the touch-sensitive display D the virtual page(s) and the further virtual page in their entirety, each of the virtual page and further virtual page(s) containing a respective completely different group of widgets and/or icons W1.

As shown in Figure 5, while in the navigation mode, the method further comprises displaying on the touch-sensitive display D indicators In2 of which virtual page is being currently displayed on the touch-sensitive display D, the amount of total virtual pages available to be displayed therein and the position of the further virtual page in relation to the displayed virtual page.

In this case, the indicators In2 are two dots, showing that there are only two virtual pages, the presently displayed virtual page, indicated by the black dot, and a right- not yet displayed further virtual page, indicated by the white dot. Any other kind of indicators suitable for performing the same or a similar function could be used.

Indicators In2 disappear when entering into the editing mode, as can be seen in Figures 1 to 4.

In the navigation mode, the widgets/icons are distributed by virtual pages and the virtual displacement (made, for example, by a drag motion) is a page by page scrolling. It allows to have the displayed information structured, and a quick displacement between widgets/icons.

In the editing mode, the virtual displacement is not a page by page scrolling but, for example a column by column or a row by row scrolling. It allows a greater precision and avoids making mistakes when searching for the new location, i.e., target area, for the widgets/icons.

A person skilled in the art could introduce changes and modifications in the embodiments described without departing from the scope of the invention as it is defined in the attached claims.

## Claims

1. A computer-implemented method for operating a touch-sensitive display, comprising:
- entering in an editing mode for reorganizing widgets and/or icons (W1) of a virtual page displayed on a touch-sensitive display (D) and of at least one further virtual page intended to be but not yet displayed on said touch-sensitive display (D) but virtually contiguous to the virtual page; and
- virtually dragging at least one widget and/or icon (Wd) from said virtual page to said at least one further virtual page, in response to the detection of a contact maintained along a corresponding drag movement made by a user in a touch input region of the touch-sensitive display (D);
wherein the method is **characterised in that** it further comprises, while carrying out said virtual dragging towards the at least one further virtual page, displaying on the touch-sensitive display (D) only a portion of the at least one further virtual page, said portion including a target area for virtually inserting the at least one widget and/or icon (Wd) being virtually dragged, and dropping in said target area the at least one widget and/or icon (Wd) being virtually dragged.

2. The method of claim 1, further comprising, while carrying out the virtual dragging towards the at least one further virtual page, sequentially displaying on the touch-sensitive display (D) contiguous portions of the at least one further virtual page, until arriving at said portion including said target area and dropping therein the at least one widget and/or icon (Wd) being virtually dragged.

3. The method of claim 2, comprising performing said sequential displaying on the touch-sensitive display (D) contiguous portions of the at least one further virtual page from the moment at which the at least one widget and/or icon (Wd) being dragged is located at the end of the virtual page contiguous to said at least one further virtual page.

4. The method of any of claims 1, 2 or 3, wherein said portion or each of said contiguous portions of the at least one further virtual page displays or is intended to display a column or a row of widgets and/or icons (W2, W3).

5. The method of any of claim 2, 3 or 4, wherein only a portion (Pe) of said contiguous portions of the at least one further virtual page which is located at a last possible location achievable by a virtual displacement corresponding to said sequential displaying is empty of widgets and/or icons.

6. The method of any of the previous claims, further comprising, while being in the editing mode, before performing said virtual dragging, displaying on the touch-sensitive display (D) an edge region of the at least one further virtual page and/or at least parts of widgets and/or icons (W2, W3) contained therein.

7. The method of any of the previous claims, wherein said at least one further virtual page comprises at least two virtual pages, respectively virtually contiguous to the left and right or to the top and bottom of the virtual page.

8. The method of any of the previous claims, further comprising, while performing said virtual dragging, displaying on the touch-sensitive display (D) an indicator (In1) of the amount of virtual displacement between the virtual and further virtual pages, both of the currently performed virtual displacement, progression thereof and of the available pending virtual displacement, wherein said virtual displacement is associated to the virtual dragging.

9. The method of any of the previous claims, further comprising entering in a navigation mode for navigating between the virtual page and the at least one further virtual page, wherein while in said navigation mode the method comprises alternatively displaying on the touch-sensitive display (D) the virtual page and the at least one further virtual page in their entirety, each of the virtual page and at least one further virtual page containing a respective completely different group of widgets and/or icons (W1).

10. The method of claim 9, wherein, while in the navigation mode, the method further comprises displaying on the touch-sensitive display (D) indicators (In2) of which virtual page, of said virtual page and at least one further virtual page, is being currently displayed on the touch-sensitive display (D), the amount of total virtual pages available to be displayed therein and the position of the at least one further virtual page in relation to the displayed virtual page.

11. A computer program, which comprises code instructions that when executed in at least one processor implement the steps of the method of any of the previous claims.

12. A touch-sensitive display (D), comprising processing means adapted to execute the code instructions of the computer program of claim 11, to implement the method of any of claims 1 to 10.
